# EUROPEAN PATENT SPECIFICATION

(11) **EP 4 084 291 B1**
(45) Date of publication and mention of the grant of the patent: **09.09.2026**
(21) Application number: 20906500.2
(22) Date of filing: 22.12.2020
(51) Int. Cl.: H02K 7/116, H02K 21/16, H02K 21/22, H02K 1/14

(54) **STATOR FOR ELECTRIC MOTOR, AND ELECTRIC MOTOR COMPRISING SAME**
STATOR FÜR EINEN ELEKTROMOTOR UND DAMIT AUSGERÜSTETER ELEKTROMOTOR
STATOR POUR MOTEUR ÉLECTRIQUE ET MOTEUR ÉLECTRIQUE COMPRENANT CE DERNIER

(30) Priority: 26.12.2019 KR 20190175417; 21.12.2020 KR 20200180150
(43) Date of publication of application: 02.11.2022
(73) Proprietor: Amotech Co., Ltd., Incheon 21629 (KR)
(72) Inventor: KIM, Byung Soo, Incheon 21629 (KR)
(74) Representative: SONN Patentanwälte GmbH & Co KG
(86) International application number: PCT/KR2020/018891
(87) International publication number: WO 2021/133029

(56) References cited:
- KR-A- 20140 022 227
- KR-A- 20170 113 634
- US-A- 4 672 253
- US-A1- 2002 116 811
- US-A1- 2004 090 701
- US-A1- 2005 174 006
- US-A1- 2006 232 159
- US-A1- 2009 134 738
- US-A1- 2016 226 321
- US-A1- 2017 093 250
- US-B2- 8 754 568

## Description

### [Technical Field]

The present invention relates to a stator for an electric motor and an electric motor including the same.

### [Background Art]

Electric motors are devices configured to generate a driving force using electric energy. The electric motors are widely applied to various electronic devices, home appliances, vehicles, or the like.

For example, the electric motors are applied to a vehicle engine to provide a driving force for driving an intake valve.

Meanwhile, in recent years, various efforts have been made to improve the output and efficiency of the vehicle engine, and improving intake efficiency by adjusting an intake valve timing is also part of these efforts.

The intake valve is opened and closed by reciprocating a drive rod connected to the intake valve through driving of a motor. To this end, an electric motor configured to operate the drive rod of the intake valve is installed in an engine room.

However, since various parts are installed in the engine room of the vehicle, there is a limitation of an installation space.

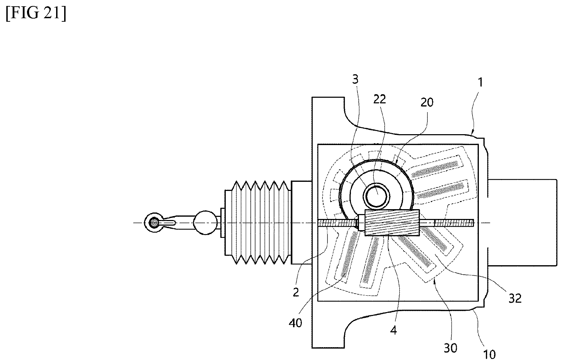

Accordingly, there is a limit in that a conventional electric motor 1 for driving a vehicle valve including a rotor 20 and a stator 30 inevitably has a rotor shaft 22 of the rotor 20 eccentrically connected to a drive rod 2 via a worm wheel 3 and a worm gear 4 as shown in FIG. 21.

That is, there is a limit that a slot 32 on which a coil 40 is wound in the stator 30 may be inevitably formed in a direction tilted to one side of a housing 10 when considering the connection between the rotor shaft 22 and the drive rod 2 due to a space limitation in the engine room.

Accordingly, the conventional electric motor 1 for driving a vehicle valve has a problem that the output and efficiency are lowered.

To solve this, when the size of the housing 10 to which the stator 30 is fixed is changed or a mounted position of the housing 10 mounted in the engine room is changed in consideration of the eccentric connection between the rotor shaft 22 and the drive rod 2, interference with various other parts installed in the engine room occurs or the arrangement positions of various other parts all need to be changed.

This has a problem in that the entire design of the vehicle engine room needs to be redesigned.

Electrical machines with yokes are also known from US 2016/0226321 A1, US 8,754,568 B2 and US 2017/093250 A1.

### [Technical Problem]

The present invention has been made in consideration of the above point, and is directed to providing a stator for an electric motor capable of improving efficiency of a motor and securing a degree of freedom in design without changing an existing mounted position even when the electric motor is mounted in a limited installation space such as an engine room, and an electric motor including the same.

### [Technical Solution]

To achieve the object, the present invention provides a stator for an electric motor according to independent claim 1. The stator comprises:
at least one coil; and
a stator core including a yoke formed in a closed loop shape, and a slot part extending from the yoke by a certain length,
wherein the slot part includes at least one first slot on which the coil is wound and at least one second slot on which the coil is not wound,
wherein the yoke includes:
   - an arc portion formed to have a predetermined curvature; and
   - a straight portion connected to an end of the arc portion,
wherein the arc portion includes a first arc portion and a second arc portion that are not connected to each other,
wherein the first arc portion and the second arc portion are formed to have different lengths,
wherein the straight portion includes a first straight portion configured to interconnect one end of the first arc portion and one end of the second arc portion and a second straight portion configured to interconnect the other end of the first arc portion and the other end of the second arc portion,
wherein the second straight portion includes a first portion connected to an end of the first arc portion and a second portion connected to an end of the first portion and connected to an end of the second arc portion, and
wherein the second portion is connected to one end of the first portion to have a predetermined angle except for 0 degrees with the first portion.

In addition, the first slot and the second slot may be formed to extend inward from the yoke by a certain length.

Alternatively, the first slot and the second slot may be formed to extend outward from the yoke by a certain length.

In addition, the slot part may form a multi-phase including a first phase and a second phase different from the first phase, and the slot part may include a plurality of first slots on which the coil is wound and a plurality of second slots on which the coil is not wound.

In this case, a slot forming the first phase among the slot part may include at least one first slot and at least one second slot, and a slot forming the second phase among the slot part may include at least one first slot and at least one second slot. In addition, the number of first slots forming the first phase and the number of first slots forming the second phase may be the same as each other, and a length of the first slot forming the first phase and a length of the first slot forming the second phase may be formed to be the same.

In addition, the slot part may include a plurality of first slots on which the coil is wound and a plurality of second slots on which the coil is not wound, and at least some of the plurality of second slots may be formed to have lengths different from that of the first slot.

In an embodiment that is not claimed, the yoke may be formed in a circular shape.

The yoke is formed in a non-circular shape including at least one straight portion. According to the invention, the yoke includes at least one arc portion formed to have a predetermined curvature; and at least one straight portion connected to an end of the arc portion.

In this case, the first slot may be a slot formed to extend from the arc portion by a certain length, and the second slot may be a slot formed to extend from the straight portion by a certain length.

In addition, in the yoke, the arc portion includes a first arc portion and a second arc portion that are not connected to each other, and the straight portion includes a first straight portion configured to interconnect one end of the first arc portion and one end of the second arc portion and a second straight portion configured to interconnect the other end of the first arc portion and the other end of the second arc portion.

The second straight portion includes a first portion connected to an end of the first arc portion and a second portion connected to an end of the first portion and connected to an end of the second arc portion. The second portion is connected to one end of the first portion to have a predetermined angle except for 0 degrees with the first portion.

Meanwhile, another aspect of the present invention provides an electric motor including: a housing; a rotor including a rotor shaft rotatably mounted in the housing and a plurality of magnets disposed in a circumferential direction of the rotor shaft; and a stator fixed to the housing, and in which a coil is wound around at least one slot, wherein the stator is the above-described stator for an electric motor.

In addition, the rotor shaft may be gear-coupled to a drive rod entering an inside of the housing via a gear unit, and the drive rod may be eccentrically connected to the rotor shaft via the gear unit.

### [Advantageous Effects]

According to the present invention, it is possible to implement high output and efficiency even when a electric motor is mounted at the same position as before without redesigning surrounding related parts even in a limited installation space such as an engine room.

In addition, according to the present invention, it is possible to freely change a position of a slot on which a coil is wound in a stator, thereby increasing the degree of freedom in design.

### [Description of Drawings]

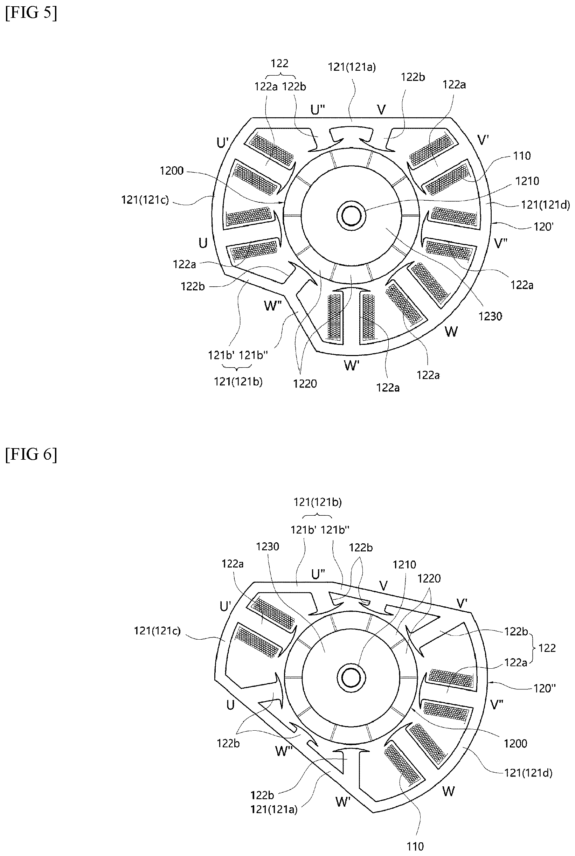

Only figures 5 and 6 represent the invention.
FIG. 1 is a view showing a stator for an electric motor
FIG. 2 is a view showing a state in which a coil has been removed in FIG. 1.
FIG. 3 is a plan view of FIG. 2.
FIG. 4 is a view showing the arrangement relationship between a slot part of a stator core and a magnet of a rotor in the stator for an electric motor
FIG. 5 is a view showing another form of the stator core applicable to FIG. 4.
FIG. 6 is a view showing still another form of the stator core applicable to FIG. 4.
FIG. 7 is view showing a stator for an electric motor
FIG. 8 is a view showing a state in which a coil has been removed in FIG. 7.
FIG. 9 is a view showing the arrangement relationship between a slot part of a stator core and a magnet of a rotor in the stator for an electric motor in FIG. 7.
FIG. 10 is a view showing another winding method of the coil applicable to FIG. 9.
FIG. 11 is a view showing still another winding method of the coil applicable to FIG. 9.
FIG. 12 is a view showing a stator for an electric motor
FIG. 13 is a view showing a state in which a coil has been removed in FIG. 12.
FIG. 14 is a view showing the arrangement relationship between a slot part of a stator core and a magnet of a rotor in the stator for an electric motor in FIG. 12.
FIG. 15 is a view showing another winding method of the coil applicable to FIG. 12.
FIG. 16 is a view showing still another winding method of the coil applicable to FIG. 12.
FIG. 17 is a view showing an electric motor to which the stator for an electric motor
FIG. 18 is a view showing a rotor and a stator extracted from FIG. 17.
FIG. 19 is a view schematically showing a state in which the electric motor of FIG. 17 is connected to a drive rod.
FIG. 20 is a view showing the rotor, the stator, and the drive rod extracted from FIG. 19.
FIG. 21 is a schematic view showing the connection relationship between a drive rod and a rotor shaft in a conventional electric motor.

Hereinafter, embodiments of the present invention will be described in detail with reference to the accompanying drawings so that those skilled in the art may easily carry out the present invention. The present invention as defined in the appended claims may be implemented in many different forms and is not limited to the embodiments described herein. To clearly describe the present invention in the drawings, parts irrelevant to the description are omitted, and the same reference numerals are added to the same or similar elements throughout the specification. In the following description, although some features may be mentioned as optional if they form part of claim 1 they are understood as being part of the invention. Also in the following description, only the passages related to figures 5 and 6 represent the invention.

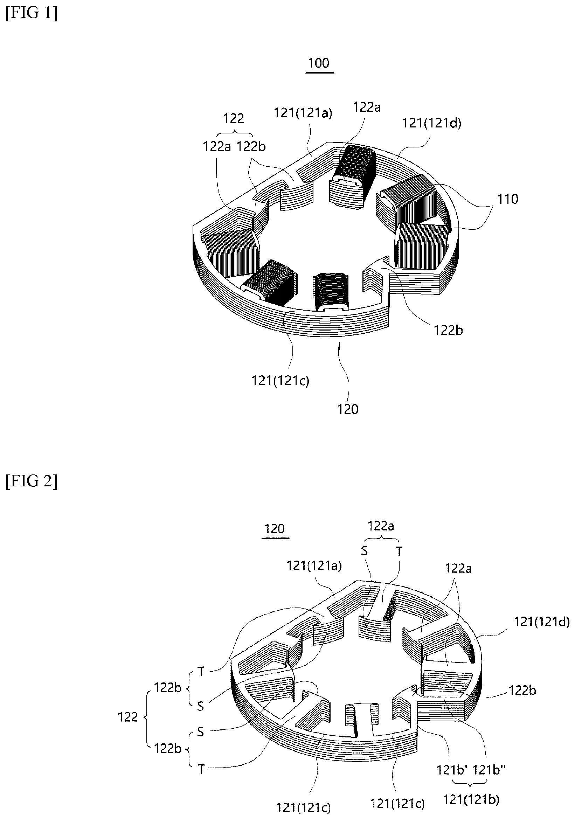

As shown in FIGS. 1, 7, and 12, stators 100, 200, and 300 for an electric motor according to one embodiment may include at least one coil 110 and stator cores 120, 220, and 320, and the at least one coil 110 may be wound around the stator cores 120, 220, and 320.

That is, the stator cores 120, 220, and 320 may include yokes 121 and 221 and slot parts 122 and 222, and the coil 110 may be wound around the slot parts 122 and 222.

As shown in FIGS. 2, 8, and 13, the stator cores 120, 220, and 320 may have a form in which a plurality of metal sheets including each of the yokes 121 and 221 and the slot parts 122 and 222, are stacked in a multi-layered form but are not limited thereto, and may also be formed as a single member.

At this time, the yokes 121 and 221 may be formed in a closed loop shape. That is, the yokes 121 and 221 may be formed in a non-circular shape including at least one straight portion or may be formed in a circular shape having a predetermined curvature.

For example, as shown in FIGS. 1 to 6, the yoke 121 may include one or more straight portions 121a and 121b and one or more arc portions 121c and 121d formed to have a predetermined curvature, and the straight portions 121a and 121b and the arc portions 121c and 121d may be connected to each other.

Accordingly, the yoke 121 may have a non-circular closed loop shape by connecting the straight portions 121a and 121b and the arc portions 121c and 121d.

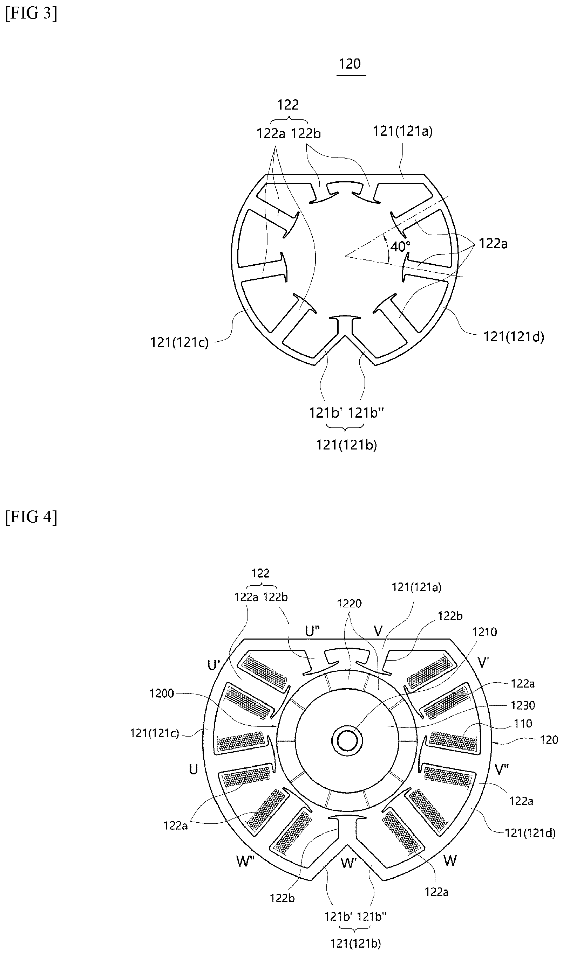

As a non-limiting example, as shown in FIGS. 4 to 6, the yoke 121 in the stator cores 120, 120', 120" may be formed in a non-circular closed loop shape through the arc portions 121c and 121d including a first arc portion 121c and a second arc portion 121d, and the straight portions 121a and 121b including a first straight portion 121a and a second straight portion 121b.

In this case, the first arc portion 121c and the second arc portion 121d may not be connected to each other, and the first straight portion 121a and the second straight portion 121b may connect the ends of each of the first arc portion 121c and the second arc portion 121d.

At this time, as shown in FIGS. 1 to 4, the first arc portion 121c and the second arc portion 121d in the stator core 120 may also be formed to have the same length, but as shown in FIGS. 5 and 6, the first arc portion 121c and the second arc portion 121d in the stator cores 120' and 120" may also be formed to have different lengths.

In addition, as shown in FIGS. 1 to 6, at least any one of the first straight portion 121a and the second straight portion 121b in the stator cores 120, 120', and 120" may be not a straight line but be formed so that a length 121b' of a part has a predetermined angle with a remaining length 121b".

Accordingly, the yoke 121 may be changed to various shapes depending on the arrangement position, lengths, and shapes of the first straight portion 121a and/or the second straight portion 121b that interconnect the first arc portion 121c and the second arc portion 121d.

As a specific example, as shown in FIG. 4, the first arc portion 121c and the second arc portion 121d in the stator core 120 may be formed to have the same lengths, the first straight portion 121a interconnecting one end of the first arc portion 121c and one end of the second arc portion 121d may be formed in a straight line, and the second straight portion 121b interconnecting the other end of the first arc portion 121c and the other end of the second arc portion 121d may include a first portion 121b' and a second portion 121b" connected to form a predetermined angle.

In this case, the first portion 121b' may have one end connected to an end of the first arc portion 121c and the other end connected to the second portion 121b", and the second portion 121b" may have one end connected to an end of the second arc portion 121d and the other end connected to the first portion 121b'.

At this time, the second portion 121b" may be connected to one end of the first portion 121b' to have a predetermined angle except for 0 degrees with the first portion 121b', and a portion where the first portion 121b' and the second portion 121b" are connected to each other may be connected to protrude into the yoke 121.

As another example, as shown in FIG. 5, the first arc portion 121c and the second arc portion 121d in the stator core 120' may be formed to have different lengths, the first straight portion 121a interconnecting one end of the first arc portion 121c and one end of the second arc portion 121d may be formed in a straight line, and the second straight portion 121b interconnecting the other end of the first arc portion 121c and the other end of the second arc portion 121d may include a first portion 121b' and a second portion 121b" connected to form a predetermined angle.

In this case, the first portion 121b' may have one end connected to an end of the first arc portion 121c and the other end connected to the second portion 121b", and the second portion 121b" may have one end connected to an end of the second arc portion 121d and the other end connected to the first portion 121b'.

At this time, the second portion 121b" may be connected to one end of the first portion 121b' to have a predetermined angle except for 0 degrees with the first portion 121b', and a portion where the first portion 121b' and the second portion 121b" are connected to each other may be connected to protrude into the yoke 121.

As yet another example, as shown in FIG. 6, the first arc portion 121c and the second arc portion 121d in the stator core 120" may be formed to have different lengths, the first straight portion 121a interconnecting one end of the first arc portion 121c and one end of the second arc portion 121d may be formed in a straight line, and the second straight portion 121b interconnecting the other end of the first arc portion 121c and the other end of the second arc portion 121d may include a first portion 121b' and a second portion 121b" connected to form a predetermined angle.

In this case, the first portion 121b' may have one end connected to an end of the first arc portion 121c and the other end connected to the second portion 121b", and the second portion 121b" may have one end connected to an end of the second arc portion 121d and the other end connected to the first portion 121b'.

At this time, the second portion 121b" may be connected to one end of the first portion 121b' to have a predetermined angle except for 0 degrees with the first portion 121b', and a portion where the first portion 121b' and the second portion 121b" are connected to each other may be connected to protrude to the outside of the yoke 121.

Accordingly, the yoke 121 may have a closed loop shape of various shapes including a straight portion other than a circular shape.

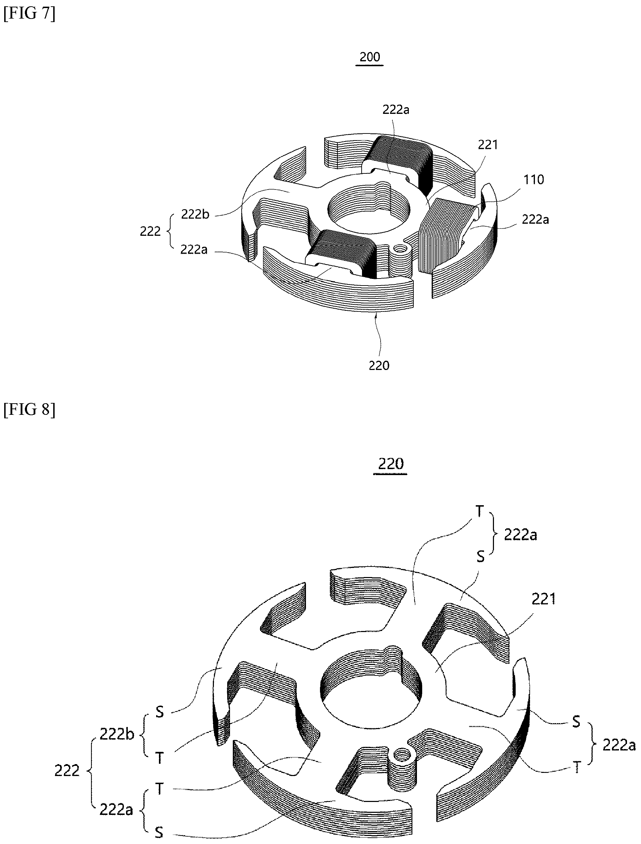

As yet another example, as shown in FIGS. 7 to 16, the yoke 221 may also be formed in a circular shape having a predetermined curvature.

However, the yoke may also be formed in a form in which at least two parts having different curvatures are interconnected.

The coil 110 configured to generate a magnetic field when power is applied may be wound around the slot parts 122 and 222. To this end, the slot parts 122 and 222 may extend inward or outward from the yokes 121 and 221 by a predetermined length so that the coil 110 may be wound with a predetermined number of turns.

For example, as shown in FIGS. 1 to 6, the slot part 122 may extend inward from the yoke 121 by a predetermined length.

The slot part 122 may include a plurality of slots 122a and 122b disposed to be spaced apart from each other along an edge of the yoke 121 and protruding inward from the edge of the yoke 121 by a predetermined length, and the plurality of slots 122a and 122b may be disposed to form an isometric angle with respect to a virtual center point as shown in FIG. 3.

Accordingly, as shown in FIGS. 4 to 6, when a rotor 1200 configuring an electric motor 1000 is disposed to be positioned at the center of the yoke 121 together with a magnet 1220, the plurality of slots 122a and 122b may be disposed to surround the rotor 1200, and the plurality of slots 122a and 122b may be disposed at equal angles along a circumference of the rotor 1200. Accordingly, the electric motor 1000 may be implemented as an internal rotor type motor.

As another example, as shown in FIGS. 7 to 16, the slot part 222 may extend from the yoke 221 to the outside by a predetermined length.

The slot part 222 may include a plurality of slots 222a and 222b disposed to be spaced apart from each other along an edge of the yoke 221 and protruding outward from the edge of the yoke 221 by a predetermined length, and the plurality of slots 222a and 222b may be disposed to form an isometric angle with respect to a center point of the yoke 221.

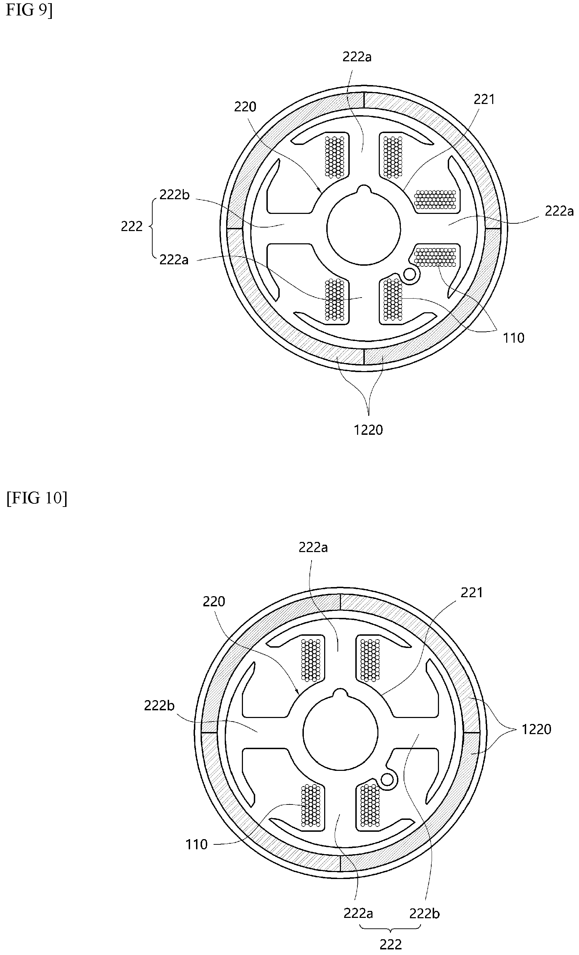

Accordingly, as shown in FIGS. 9, 10, and 14 to 16, the magnet 1220 configuring the rotor 1200 may be disposed to surround the slot part 222 from the outside of the yoke 221, and a rotor shaft configuring the rotor 1200 may be disposed to be positioned on a central portion of the yoke 221. Accordingly, the electric motor may be implemented as an external rotor type motor.

At this time, the coil 110 wound around the slot parts 122 and 222 may be wound only around some slots 122a and 222a among the plurality of slots 122a, 122b, 222a, and 222b configuring the slot parts 122 and 222.

That is, the slot parts 122 and 222 may include one or more first slots 122a and 222a on which the coil 110 is wound and one or more second slots 122b and 222b on which the coil 110 is not wound.

Here, each of the first slots 122a and 222a and the second slots 122b and 222b may include teeth T extending inward or outward from the yokes 121 and 221 by a predetermined length and a shoe S formed at an end of each of the teeth T, and the coil 110 may be wound around the teeth T of the first slots 122a and 222a.

In this case, the one or more first slots 122a and 222a and the one or more second slots 122b and 222b may form the same phase.

That is, when the stators 100 and 200 for an electric motor according to one embodiment is applied to a single-phase motor, the first slots 122a and 222a and the second slots 122b and 222b may form the same phase, and when the plurality of first slots 122a and 222a are provided, the plurality of first slots 122a and 222a may be formed so that the teeth T have the same length.

At this time, as shown in FIGS. 1 to 3, when the stator core 120 according to one embodiment includes a plurality of slots extending inward from the yoke 121 formed in a non-circular shape by a certain length, the first slot 122a may be formed to extend \ inward from the arc portions 121c and 121d of the yoke 121 by a certain length, and the second slot 122b may be formed to extend inward from the straight portions 121a and 121b of the yoke 121 by a certain length.

Accordingly, even when the yoke 121 is formed in a non-circular closed loop shape as described above and the plurality of first slots 122a are provided, a length of each of the first slots 122a may have the same length, and the first slot 122a and the second slot 122b may be formed so that the shoe S portions formed at each end are positioned on a virtual circumference.

Accordingly, even when the rotor 1200 is disposed inside the yoke 121, the first slot 122a and the second slot 122b configuring the slot part 122 may be disposed to surround a circumferential surface of the rotor 1200.

In addition, as shown in FIGS. 7 to 11, when the yoke 221 is formed in the circular shape in the stator core 220 according to one embodiment , the slot part 222 may include a plurality of slots 222a and 222b having the same phase, and the plurality of slots 222a and 222b may include at least one first slot 222a on which the coil 110 is wound and at least one second slot 222b on which the coil 110 is not wound.

As a specific example, as shown in FIGS. 7 to 11, when the stator core 220 according to one embodiment includes four slots extending outward from the yoke 221 formed in the circular shape by a certain length and is applied to a four-pole four-slot single-phase motor in which the total number of magnets 1220 is four, the four slots may have the same phase and be composed of at least one first slot 222a and on which the coil 110 is wound and at least one second slot 222b on which the coil 110 is not wound.

Accordingly, even when a mechanical interference problem occurs in the process of fixing the stator core 220, it is possible to increase a degree of freedom in design by winding the coil 110 only around some of the plurality of slots to configure the first slot 222a. That is, when a fastening member such as a bolt is fastened to the yoke 221 in the process of mounting the stator 200 in the housing of the electric motor, the first slot 222a on which the coil 110 is wound may be configured to avoid the interference with the fastened portion to which the yoke 221 is fastened.

As another example, when the stators 100 and 300 for an electric motor according to one embodiment are applied to a multi-phase motor, the slot parts 122 and 222 may include a plurality of first slots 122a and 222a and a plurality of second slots 122b and 222b, and the slot parts 122 and 222 may be formed to have a multi-phase including a first phase and a second phase different from the first phase.

In this case, some of the plurality of first slots 122a and 222a may have the first phase, and some of the plurality of first slots 122a and 222a may have the second phase.

Likewise, some of the plurality of second slots 122b and 222b may have the first phase, and some of the plurality of second slots 122b and 222b may have the second phase.

That is, when the slot parts 122 and 222 are formed to have the multi-phase, the slots forming the first phase among the slot parts 122 and 222 may include one or more first slot 122a and 222a and one or more second slots 122b and 222b, and the slots forming the second phase among the slot parts 122 and 222 may also include one or more first slots 122a and 222a and one or more second slots 122b and 222b.

In this case, the number of first slots 122a and 222a forming the first phase and the number of first slots 122a and 222a forming the second phase may be the same as each other, and the lengths of the teeth T of the first slots 122a and 222a forming the first phase and the lengths of the teeth T of the first slots 122a and 222a forming the second phase may be the same as each other.

At this time, as shown in FIGS. 1 to 6, when the yoke 121 is formed in a non-circular closed loop shape including one or more straight portions 121a and 121b, the first slot 122a may be formed to extend inward from the arc portions 121c and 121d of the yoke 121 by a certain length, and the second slot 122b may be formed to extend inward from the straight portions 121a and 121b of the yoke 121 by a certain length.

Accordingly, even when the yoke 121 is formed in the non-circular closed loop shape as described above and the plurality of first slots 122a and the plurality of second slots 122b are provided, the length of the teeth T of each of the first slots 122a may have the same length, and the plurality of first slots 122a and second slots 122b may be formed so that the shoe S portions formed at each end are positioned on the virtual circumference.

Accordingly, as shown in FIGS. 4 to 6, when the rotor 1200 is disposed inside the yoke 121, the plurality of first slots 122a and second slots 122b configuring the slot part 122 may be disposed to surround the circumferential surface of the rotor 1200.

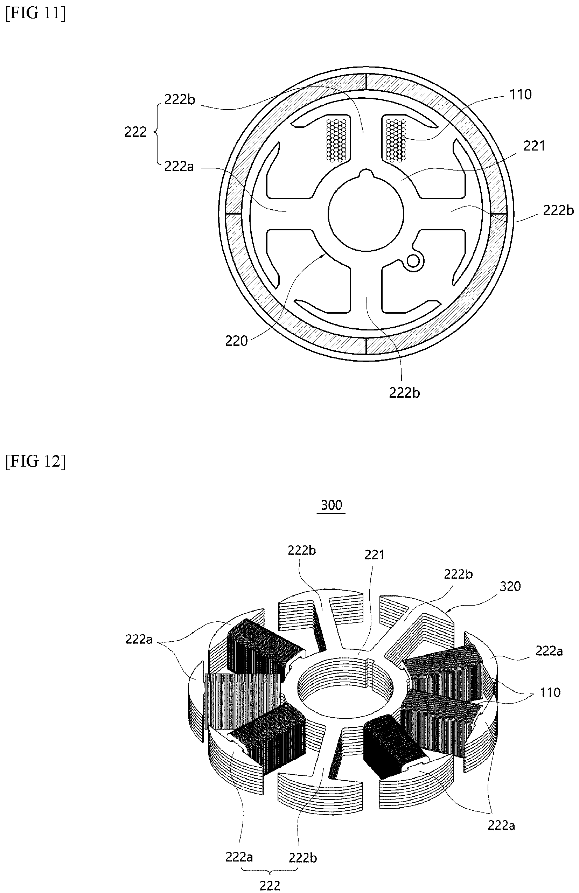

In addition, as shown in FIGS. 12 to 16, when the yoke 221 is formed in a circular closed loop shape, the first slot 222a and the second slot 222b may be formed to extend outward from an edge of the yoke 221 by a certain length, and the teeth T of the first slot 222a and the teeth T of the second slot 222b may be formed to have the same length.

Accordingly, even when the yoke 221 is formed in the circular closed loop shape and the plurality of first slots 222a and the plurality of second slots 222b are provided, the shoe S portions formed at the ends of the plurality of first slots 222a and the plurality of second slots 222b may be formed to be positioned on the virtual circumference.

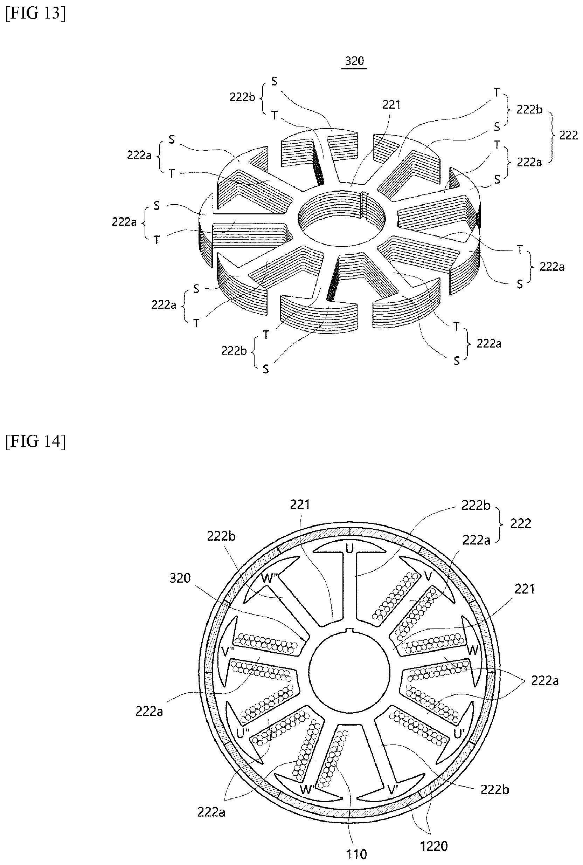

Accordingly, as shown in FIGS. 14 to 16, when the magnet 1220 is disposed outside the yoke 221 to surround the slot part 222, the shoe S of each of the plurality of first slots 222a and second slots 222b configuring the slot part 222 may be disposed to face the magnet 1220.

As a non-limiting example, the slot parts 122 and 222 may be formed in three phases including a first phase, a second phase, and a third phase, and the slot parts 122 and 222 may include a plurality of first slots 122a and 222a and a plurality of second slots 122b and 222b, and each of the first, second, and third phases may be configured to have the same number of first slots 122a and 222a and second slots 122b and 222b.

As a specific example, as shown in FIGS. 4 and 5, in an electric motor having a 9:10 structure in which the yoke 121 is formed in a non-circular closed loop shape, and the stator 100 in which the total number of slots 122a and 122b extending from the yoke 121 by a certain length is 9 and the rotor 1200 in which the total number of magnets 1220 is 10 are included, the first phase may include U, U', and U", the second phase may include V, V', and V", and the third phase may include W, W', and W".

In this case, each of the first phase, the second phase, and the third phase may be formed through three slots 122a and 122b, and each phase may include two first slots 122a and one second slot 122b.

That is, U and U' configuring the first phase may be formed through two first slots 122a, and the remaining U" configuring the first phase may be formed through one second slot 122b.

In addition, V' and V" configuring the second phase may be formed through two first slots 122a, and the remaining V configuring the second phase may be formed through one second slot 122b.

Likewise, W and W" configuring the third phase may be formed through two first slots 122a, and the remaining W' configuring the third phase may be formed through one second slot 122b.

In this case, the length of the second slot 122b forming the U", V, and W' may be relatively shorter than the length of the first slot 122a forming the U, U', V', V", W, and W", and the first slots 122a forming the U, U', V', V", W, and W" may have the same length.

In addition, the first slot 122a forming the U, U', V', V", W, and W" may be formed to extend from the arc portions 121c and 121d of the yoke 121, and the second slot 122b forming the U", V, and W' may be formed to extend from the straight portions 121a and 121b of the yoke 121.

Accordingly, the shoe S of each of the first slots 122a and the shoe S of each of the second slots 122b may be disposed to surround the magnet 1220 provided in the rotor 1200 by the same distance.

That is, the shoe S of each of the first slots 122a and the shoe S of each of the second slots 122b may be disposed to be positioned on the virtual circumference with the rotor shaft 1210 provided in the rotor 1200 as a central point.

Accordingly, even when the yoke 121 is formed in the non-circular shape, since the coil 110 may be wound around each of the first slots 122a formed to have the same length in the same number of turns, and the first slots 122a and the second slots 122b forming each phase may be disposed to surround the magnet 1220 of the rotor 1200 by the same distance, it is possible to implement a uniform driving force.

Similarly, as shown in FIG. 6, in an electric motor having a 9:10 structure in which the yoke 121 is formed in the non-circular closed loop shape and the stator 100 in which the total number of slots 122a and 122b extending from the yoke 121 by a certain length is 9 and the rotor 1200 in which the total number of magnets 1220 is 10 are included, the first phase may include U, U', and U", the second phase may include V, V', and V", and the third phase may include W, W', and W".

In this case, each of the first phase, the second phase, and the third phase may be formed through three slots 122a and 122b, and each of the phases includes one first slot 122a and two second slots 122b.

That is, the U' configuring the first phase may be formed through the one first slot 122a, and the remaining U and U" configuring the first phase may be formed through two second slots 122b.

In addition, the V" configuring the second phase may be formed through one first slot 122a, and the remaining V and V' configuring the second phase may be formed through two second slots 122b.

Likewise, the W configuring the third phase may be formed through one first slot 122a, and the remaining W' and W" configuring the third phase may be formed through two second slots 122b.

In this case, the length of the second slot 122b forming the U, U", V, V', W', and W" may be relatively shorter than the length of the first slot 122a forming the U', V", and W, and the first slot 122a forming the U', V", and W may have the same length.

In addition, the first slot 122a forming the U', V", and W may be formed to extend from the arc portions 121c and 121d of the yoke 121, and the second slot 122b forming the U, U", V, V', W', and W" may be formed to extend from the straight portions 121a and 121b of the yoke 121.

Accordingly, the shoe S of each of the first slots 122a and the shoe S of each of the second slots 122b may be disposed to surround the magnet 1220 provided in the rotor 1200 by the same distance.

That is, the shoe S of each of the first slots 122a and the shoe S of each of the second slots 122b may be disposed to be positioned on the virtual circumference with the rotor shaft 1210 provided in the rotor 1200 as a central point.

Accordingly, even when the yoke 121 is formed in the non-circular shape, since the coil 110 may be wound around each of the first slots 122a formed to have the same length in the same number of turns, and the first slots 122a and the second slots 122b forming each phase may be disposed to surround the magnet 1220 of the rotor 1200 by the same distance, it is possible to implement the uniform driving force.

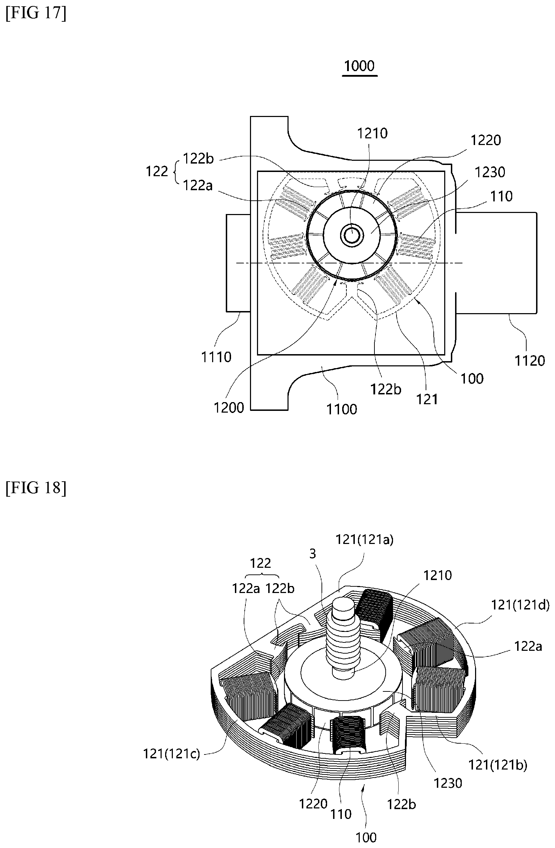

Accordingly, when the electric motor 1000 to which the stator 100 for an electric motor according to one embodiment is applied is used, as shown in FIG. 17, even when the rotor shaft 1210 configuring the electric motor 1000 is disposed at a position tilted to one side from the center of the housing 1100, the plurality of first slots 122a and second slots 122b may be disposed to surround the circumference of the rotor 1200 as a whole.

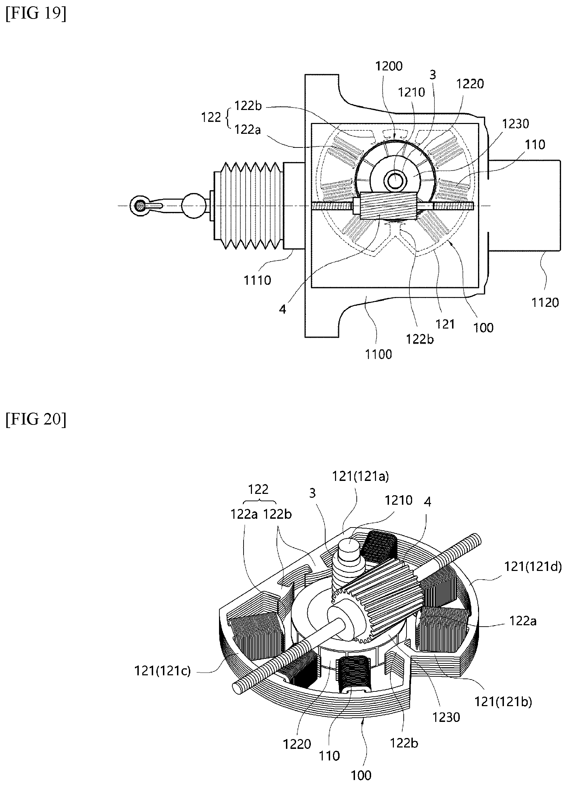

Accordingly, as shown in FIG. 19, even when the electric motor 1000 to which the stator 100 for an electric motor according to one embodiment is applied is mounted in a limited space having a fixed size and shape and the rotor shaft 1210 is eccentrically connected to the drive rod 2, the plurality of first slots 122a and second slots 122b may be disposed to surround the circumference of the rotor 1200 as a whole.

As described above, the stator 100 for an electric motor according to one embodiment has an advantage in that the yoke 121 may be formed in a non-circular shape and thus the entire shape may be variously changed, and the length of each of the first slots 122a on which the coil 110 is wound may be formed to be the same even when the shape of the yoke 121 is changed, so that it is possible to increase the degree of freedom in design as well as preventing a reduction in efficiency of the motor.

As another example, as shown in FIGS. 14 to 16, in an electric motor having a 3:4 structure in which the yoke 221 is formed in the circular closed loop shape and the stator 100 in which the total number of slots 222a and 222b extending outward from the yoke 221 by a certain length is 9 and the rotor 1200 in which the total number of magnets 1220 is 12 are included, the first phase may include U, U', and U" , the second phase may include V, V', and V", and the third phase may include W, W', and W".

In this case, each of the first phase, the second phase, and the third phase may be formed through three slots 222a and 222b, and each phase may include at least one first slot 222a and at least one second slot 222b.

That is, as shown in FIG. 14, the U' and U" configuring the first phase may be formed through two first slots 222a, and the remaining U configuring the first phase may be formed through one second slot 222b.

In addition, the V and V' configuring the second phase may be formed through two first slots 222a, and the remaining V" configuring the second phase may be formed through one second slot 222b.

Likewise, the W and W' configuring the third phase may be formed through two first slots 222a, and the remaining W" configuring the third phase may be formed through one second slot 222b.

In this case, six first slots 222a and three second slots 222b forming each phase may have the teeth T of the same length.

Accordingly, the shoe S of each of the first slots 222a and the shoe S of each of the second slots 222b may be disposed to be positioned on the virtual circumference with respect to a center point of the yoke 221.

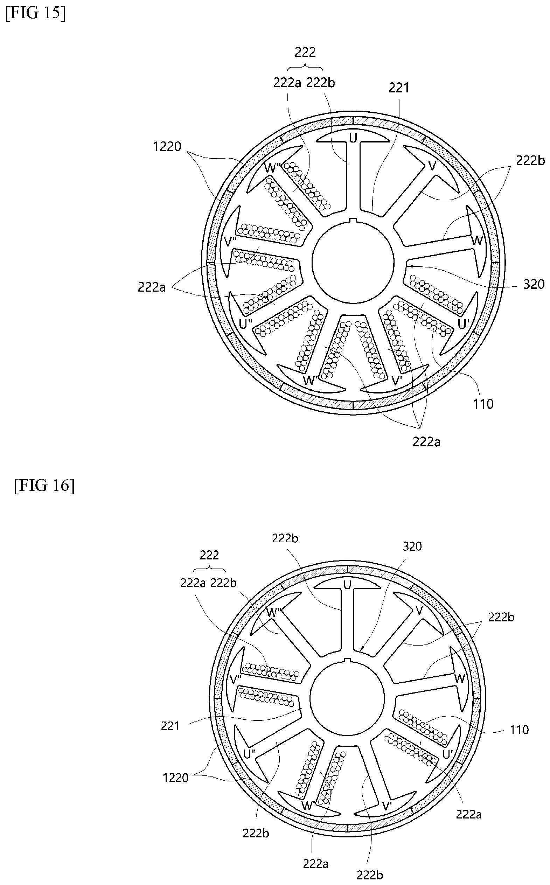

Similarly, as shown in FIG. 15, the U' and U" configuring the first phase may be formed through two first slots 222a, and the remaining U configuring the first phase may be formed through one second slot 222b.

In addition, the V' and V" configuring the second phase may be formed through two first slots 222a, and the remaining V configuring the second phase may be formed through one second slot 222b.

Likewise, the W' and W" configuring the third phase may be formed through two first slots 222a, and the remaining W configuring the third phase may be formed through one second slot 222b.

In this case, six first slots 222a and three second slots 222b forming each phase may have the teeth T of the same length.

Accordingly, the shoe S of each of the first slots 222a and the shoe S of each of the second slots 222b may be disposed to be positioned on the virtual circumference with respect to the center point of the yoke 221.

As still another example, as shown in FIG. 16, the U' configuring the first phase may be formed through one first slot 222a, and the remaining U and U" configuring the first phase may be formed through two second slots 222b.

In addition, the V" configuring the second phase may be formed through one first slot 222a, and the remaining V and V' configuring the second phase may be formed through two second slots 222b.

Likewise, the W' configuring the third phase may be formed through one first slot 222a, and the remaining W and W" configuring the third phase may be formed through two second slots 222b.

In this case, three first slots 222a and six second slots 222b forming each phase may have the teeth T of the same length.

Accordingly, the shoe S of each of the first slots 222a and the shoe S of each of the second slots 222b may be disposed to be positioned on the virtual circumference with respect to the center point of the yoke 221.

As described above, the stator 300 for an electric motor according to one embodiment may variously change a position at which the coil 110 is wound through the first slot 222a on which the coil 110 is wound and the second slot 222b on which the coil is not wound even when the plurality of slots 222a and 222b extend from the yoke 221 formed in the circular shape by the same length.

Accordingly, even when a mechanical interference problem occurs in the process of fixing the stator 300 for an electric motor according to one embodiment, it is possible to increase the degree of freedom in design by winding the coil 110 only around some of the plurality of slots to configure the first slot 222a. That is, when a fastening member such as a bolt is fastened to the yoke 221 in the process of mounting the stator 300 in the housing of the electric motor, the first slot 222a on which the coil 110 is wound may be variously configured to avoid the interference with the fastened portion to which the yoke 221 is fastened.

In the drawings and the description, when the stators 100 and 200 for an electric motor according to one embodiment are applied to a multi-phase motor, the multi-phase motor having the 9:10 structure in which the total number of slots 122a and 122b is 9 and the total number of magnets 1220 of the rotor 1200 is 10, or the multi-phase motor having the 3:4 structure in which the total number of slots 122a and 122b is 9 and the total number of magnets 1220 of the rotor 1200 is 12 has been described as an example, but the present invention is not limited thereto, and when the total number of slots is 6 or more, it may be applied without limitation.

For example, the stators 100 and 300 for an electric motor according to one embodiment may be applied to not only an electric motor having a 3:2 structure in which the total number of slots is 9 and the total number of magnets 1220 is 6 but also an electric motor having a 9:8 structure in which the total number of slots is 9 and the total number of magnets 1220 is 8.

In addition, the stators 100 and 300 for an electric motor according to one embodiment may be applied to not only a three-phase motor having the above-described structure but also a multi-phase motor having a different structure.

In addition, in the stators 100 and 300 for an electric motor according to one embodiment, the total number of first slots 122a on which the coil 110 is wound and the total number of second slots 122b on which the coil 110 is not wound may also be the same as each other but also different from each other.

Meanwhile, the above-described stators 100, 200, and 300 for an electric motor may be implemented by the electric motor 1000.

As described above, the electric motor 1000 according to one embodiment may be applied to various devices such as industrial equipment, home appliances, vehicles, and the like.

As a non-limiting example, the electric motor 1000 may be used for opening/closing a valve installed in a vehicle, and the valve may be an engine intake valve configured to adjust an air intake amount to an engine of the vehicle. In this case, the valve may be opened and closed through the drive rod 2, and the electric motor 1000 may provide a driving force capable of moving the drive rod 2. However, the application target of the electric motor 1000 according to one embodiment is not limited thereto.

Hereinafter, for convenience of description, the electric motor 1000 according to one embodiment will be described as being used as the electric motor for driving the vehicle valve.

That is, the electric motor 1000 according to one embodiment may include a housing 1100, a rotor 1200, and a stator 100 as shown in FIG. 17, and the stator 100 may be the stator 100 for an electric motor shown in FIGS. 1 to 4.

However, the stators 100 for an electric motor are not limited thereto, and the stator 200 and 300 shown in FIGS. 5 to 16 may also be applied in the same manner, and the rotor 1200 may be appropriately changed depending on the shapes of the stators 100, 200, and 300. That is, the rotor 1200 may be changed to an internal type rotor or an external type rotor according to the shape of the stator.

The housing 1100 may be mounted somewhere in a vehicle such as an engine room of the vehicle, and the rotor 1200 and the stator 100 may be installed therein.

The housing 1100 may have a coupling portion 1110 formed at one side so that the drive rod 2 gear-coupled to the rotor 1200 may enter.

In addition, the housing 1100 may include a connector unit 1120 for electrical connection with a circuit board (not shown) installed therein in order to control the driving of the rotor 1200 and the stator 100.

The housing 1100 may also be made of a material having a heat dissipation property to dissipate heat generated during operation to the outside. For example, the housing 1100 may be made of a known heat-dissipating plastic material.

The rotor 1200 may include a plurality of magnets 1220 disposed to be positioned on the circumference of the rotor shaft 1210 having a certain length, and may be rotatably mounted in the housing 1100.

That is, the rotor 1200 may include the rotor shaft 1210 rotatably mounted in the housing 1100 and a rotor core 1230 formed to surround the circumference of the rotor shaft 1210, and the plurality of magnets 1220 may be disposed in a circumferential direction of the rotor core 1230.

As shown in FIG. 18, the rotor 1200 may be disposed to be positioned inside the stator 100. Accordingly, when a current is supplied to the coil 110 of the stator 100, the rotor 1200 may be rotated through the interaction with a magnetic field generated from the coil 110.

At this time, the rotor shaft 1210 may be gear-coupled to the drive rod 2 entering the inside of the housing 1100 through the coupling portion 1110 via a gear unit, and the rotor shaft 1210 may be eccentrically connected to the drive rod 2 inside the housing 1100. For example, the gear unit may be a worm wheel 3 and a worm gear 4.

Specifically, as shown in FIGS. 19 and 20, the rotor shaft 1210 may be rotatably mounted at a position that is eccentric from the center of the housing 1100, and the drive rod 2 may be disposed in a direction matching with a virtual center axis of the housing 1100.

In this case, as shown in FIGS. 18 and 20, the worm wheel 3 may be axially coupled to an end of the rotor shaft 1210, and as shown in FIG. 20, the worm gear 4 gear-coupled to the worm wheel 3 may be provided on the drive rod 2.

Accordingly, the rotor shaft 1210 and the drive rod 2 may be eccentrically connected to each other through the worm wheel 3 and the worm gear 4, and when the rotor shaft 1210 rotates, the drive rod 2 may reciprocate according to a rotation direction of the rotor shaft 1210. Accordingly, the valve connected to the drive rod 2 may be opened and closed according to a moving direction of the drive rod 2.

The stator 100 may be disposed to surround the magnet 1220 of the rotor 1200.

That is, the stator 100 may include at least one coil 110 and a stator core 120, the stator core 120 may include a yoke 121 and a slot part 122, and the coil 110 may be wound around the slot part 122.

As the stator 100, the stator 100 for an electric motor described above with reference to FIGS. 1 to 4 may be applied as it is.

That is, the yoke 121 may be formed in the non-circular closed loop shape as described above, and the slot part 122 may be composed of at least one first slot 122a on which the coil 110 is wound and at least one second slot 122b on which the coil 110 is not wound.

Since specific contents of the yoke 121 and the slot part 122 are the same as those described above, a detailed description thereof will be omitted.

Accordingly, in the electric motor 1000 according to one embodiment, as shown in FIG. 19, even when the rotor shaft 1210 is mounted at a position tilted to one side other than a central portion of the housing 1100 inside the housing 1100 and the drive rod 2 and the rotor shaft 1210 are eccentrically connected to each other, the plurality of first slots 122a on which the coil 110 is wound may be disposed to surround the circumference of the rotor shaft 1210.

In particular, as shown in FIGS. 17 and 19, when the stator core 120 is mounted inside the housing 1100 so that the above-described first straight portion 121a is parallel to an inner wall surface of the housing 1100, it is possible to maximize space utilization within a limited space.

That is, even when the rotor shaft 1210 is disposed at the position tilted to one side from the center of the housing 1100 so that the rotor shaft 1201 may be eccentrically connected to the drive rod 2, the length of the first slot 122a on which the coil 110 is wound may be relatively longer than the length of the second slot 122b on which the coil 110 is not wound, and the first slots 122a may be disposed at both sides with respect to the rotor shaft 1210, so that it is possible to implement the maximum torque and the maximum efficiency.

Accordingly, when the rotor shaft 1210 is disposed to be positioned at the position tilted to one side from the center of the housing 1100 so that the rotor shaft 1210 may be eccentrically connected to the drive rod 2, as shown in FIG. 21, the plurality of slots 122a and 122b on which the coil is wound are disposed to surround only a part of the entire circumference of the rotor 20 in the conventional electric motor 1, but in the electric motor 1000 according to one embodiment, as shown in FIG. 19, the plurality of first slots 122a on which the coil 110 is wound may be disposed to surround the entire circumference of the rotor 1200 by maximizing the space utilization within the housing 1100 using the first straight portion 121a.

Accordingly, in the electric motor 1000 according to one embodiment, even when the rotor shaft 1210 and the drive rod 2 are eccentrically connected to each other in a limited space with a predetermined size and shape, the first slots 122a on which the coil 110 is wound may be disposed to surround the entire circumference of the rotor 1200.

Accordingly, in the electric motor 1000 according to one embodiment, it is possible to prevent the reduction in efficiency due to heat loss by reducing the amount of heat generated during operation of the motor while maintaining the existing size and mounted position of the housing 1100 and the eccentric connection between the drive rod 2 and the rotor shaft 1210.

Accordingly, the efficiency of the electric motor 1000 according to one embodiment can be improved compared to the conventional electric motor.

This may be confirmed from the results in Table 1 below.

Comparative Examples 1 and 2 are specifications and motor efficiency compared to the required specifications of the conventional electric motor 1 shown in FIG. 21, and Examples 1 and 2 are specifications and motor efficiency compared to the required specifications of the electric motor 1000 to which the stator 100 for an electric motor according to one embodiment is applied.

**Table 1**

| Specifications | | Comparative Example 1 | Comparative Example 2 | Example 1 | Example 2 |
|---|---|---|---|---|---|
| Coil | Diameter/the number of turns of coil | 0.26/300 | 0.26/300 | 0.28/150 | 0.28/150 |
| Resistance | Ohm | 2.3 | 2.3 | 1.96 | 1.96 |
| Magnet | | P9 | P9 | P11 | 28AZ |
| Stator core | | 50H11200 stacking 5t | 50H11200 stacking 5t | 50H11200 stacking 5t | 50H470 stacking 5t |
| Back yoke | t | - | - | 1.0t | 1.0t |
| Back emf | V | 3.06 | 3.06 | 3.99 | 5.37 |
| Phase current | 500 mA | 710 | 490 | 490 | 490 |
| RPM | 4000 | 4000 | 4000 | 4000 | 4000 |
| Torque | 13 mNm or more | 15.5 | 10.8 | 13.7 | 15.3 |
| Phase voltage | 5.2 Volt | 6.5 | 5.3 | 5.2 | 5.1 |
| Iron loss | Watt | 0.44 | 0.34 | 0.58 | 0.38 |
| Efficiency | % | 54.9 | 59.7 | 67.8 | 72.3 |

As can be confirmed in Table 1 above, the electric motor 1000 to which the stator 100 for an electric motor according to one embodiment is applied may implement a high efficiency of 8% or more while implementing a torque of the same level compared to the conventional general electric motor 1.

## Claims

1. A stator (100, 200, 300) for an electric motor (1000) comprising:
at least one coil (110); and
a stator core (120, 120', 120", 220, 320) including a yoke (121, 221) formed in a closed loop shape, and a slot part (122, 222) extending from the yoke (121, 221) by a certain length,
wherein the slot part (122, 222) includes at least one first slot (122a, 222a) on which the coil (110) is wound and at least one second slot (122b, 222b) on which the coil (110) is not wound,
wherein the yoke (121, 221) includes:
• at least one arc portion (121c, 121d) formed to have a predetermined curvature; and
• at least one straight portion (121a, 121b) connected to an end of the at least one arc portion (121c, 121d),
wherein the at least one arc portion (121c, 121d) includes a first arc portion (121c) and a second arc portion (121d) that are not directly connected to each other,
wherein the at least one straight portion (121a, 121b) includes a first straight portion (121a) configured to interconnect one end of the first arc portion (121c) and one end of the second arc portion (121d) and a second straight portion (121b) configured to interconnect the other end of the first arc portion (121c) and the other end of the second arc portion (121d),
wherein the second straight portion (121b) includes a first portion (121b') connected to an end of the first arc portion (121c) and a second portion (121b") connected to an end of the first portion (121b') and connected to an end of the second arc portion (121d), and
wherein the second portion (121b'') is connected to one end of the first portion (121b') to have a predetermined angle except for 0 degrees with the first portion (121b'), **characterized in that** the first arc portion (121c) and the second arc portion (121d) are formed to have different lengths.

2. The stator (100, 200, 300) of claim 1, wherein the first slot (122a, 222a) and the second slot (122b, 222b) are formed to extend inward from the yoke (121, 221) by a certain length.

3. The stator (100, 200, 300) of claim 1, wherein the first slot (122a, 222a) and the second slot (122b, 222b) are formed to extend outward from the yoke (121,221) by a certain length.

4. The stator (100, 200, 300) of claim 1, wherein the slot part (122, 222) forms a multi-phase including a first phase and a second phase different from the first phase,
the slot part (122, 222) includes a plurality of first slots (122a, 222a) on which the coil (110) is wound and a plurality of second slots (122b, 222b) on which the coil (110) is not wound,.

5. The stator (100, 200, 300) of claim 1, wherein the slot part (122, 222) forms a multi-phase including a first phase and a second phase different from the first phase,
the slot part (122, 222) includes a plurality of first slots (122a, 222a) on which the coil (110) is wound and a plurality of second slots (122b, 222b) on which the coil (110) is not wound, and
the number of first slots (122a, 222a) forming the first phase and the number of first slots (122a, 222a) forming the second phase are the same as each other.

6. The stator (100, 200, 300) of claim 1, wherein the slot part (122, 222) forms a multi-phase including a first phase and a second phase different from the first phase,
the slot part (122, 222) includes a plurality of first slots (122a, 222a) on which the coil (110) is wound and a plurality of second slots (122b, 222b) on which the coil (110) is not wound, and
a length of the first slot (122a, 222a) forming the first phase and a length of the first slot (122a, 222a) forming the second phase are formed to be the same.

7. The stator (100, 200, 300) of claim 1, wherein the slot part (122, 222) includes a plurality of first slots (122a, 222a) on which the coil (110) is wound and a plurality of second slots (122b, 222b) on which the coil (110) is not wound, and
at least some of the plurality of second slots (122b, 222b) are formed to have lengths different from that of the first slot (122a, 222a).

8. The stator (100, 200, 300) of claim 1, wherein the first slot (122a, 222a) is a slot (122a, 222a) formed to extend from the arc portion (121c, 121d) by a certain length, and
the second slot (122b, 222b) is a slot (122b, 222b) formed to extend from the straight portion (121a, 121b) by a certain length.

9. An electric motor (1000) comprising:
a housing (1100);
a rotor (1200) including a rotor shaft (1210) rotatably mounted in the housing (1100) and a plurality of magnets (1220) disposed in a circumferential direction of the rotor shaft (1210); and
a stator (100, 200, 300) fixed to the housing (1100), and in which a coil (110) is wound around at least one slot,
wherein the stator (100, 200, 300) is the stator (100, 200, 300) for an electric motor (1000) of any one of claims 1 to 8.

10. The electric motor (1000) of claim 9, wherein the rotor shaft (1210) is gear-coupled to a drive rod (2) entering an inside of the housing (1100) via a gear unit, and
the drive rod (2) is eccentrically connected to the rotor shaft (1210) via the gear unit.

## Patentansprüche

1. Stator (100, 200, 300) für einen Elektromotor (1000), umfassend:
mindestens eine Spule (110); und
einen Statorkern (120, 120', 120", 220, 320), der ein Joch (121, 221), das in einer geschlossenen Schleifenform ausgebildet ist, und einen Nutteil (122, 222) aufweist, der sich von dem Joch (121, 221) um eine bestimmte Länge erstreckt,
wobei der Nutteil (122, 222) mindestens eine erste Nut (122a, 222a), auf die die Spule (110) gewickelt ist, und mindestens eine zweite Nut (122b, 222b), auf die die Spule (110) nicht gewickelt ist, aufweist,
wobei das Joch (121, 221) aufweist:
• mindestens einen Bogenabschnitt (121c, 121d), der so ausgebildet ist, dass er eine vorbestimmte Krümmung aufweist; und
• mindestens einen geraden Abschnitt (121a, 121b), der mit einem Ende des mindestens einen Bogenabschnitts (121c, 121d) verbunden ist,
wobei der mindestens eine Bogenabschnitt (121c, 121d) einen ersten Bogenabschnitt (121c) und einen zweiten Bogenabschnitt (121d) aufweist, die nicht direkt miteinander verbunden sind,
wobei der mindestens eine gerade Abschnitt (121a, 121b) einen ersten geraden Abschnitt (121a), der konfiguriert ist, um ein Ende des ersten Bogenabschnitts (121c) und ein Ende des zweiten Bogenabschnitts (121d) miteinander zu verbinden, und einen zweiten geraden Abschnitt (121b), der konfiguriert ist, um das andere Ende des ersten Bogenabschnitts (121c) und das andere Ende des zweiten Bogenabschnitts (121d) miteinander zu verbinden, aufweist,
wobei der zweite gerade Abschnitt (121b) einen ersten Abschnitt (121b'), der mit einem Ende des ersten Bogenabschnitts (121c) verbunden ist, und einen zweiten Abschnitt (121b''), der mit einem Ende des ersten Abschnitts (121b') verbunden ist und mit einem Ende des zweiten Bogenabschnitts (121d) verbunden ist, aufweist, und
wobei der zweite Abschnitt (121b'') mit einem Ende des ersten Abschnitts (121b') so verbunden ist, dass er einen vorbestimmten Winkel mit Ausnahme von 0 Grad mit dem ersten Abschnitt (121b') aufweist, **dadurch gekennzeichnet, dass** der erste Bogenabschnitt (121c) und der zweite Bogenabschnitt (121d) so ausgebildet sind, dass sie unterschiedliche Längen aufweisen.

2. Stator (100, 200, 300) nach Anspruch 1, wobei die erste Nut (122a, 222a) und die zweite Nut (122b, 222b) so ausgebildet sind, dass sie sich von dem Joch (121, 221) um eine bestimmte Länge nach innen erstrecken.

3. Stator (100, 200, 300) nach Anspruch 1, wobei die erste Nut (122a, 222a) und die zweite Nut (122b, 222b) so ausgebildet sind, dass sie sich von dem Joch (121, 221) um eine bestimmte Länge nach außen erstrecken.

4. Stator (100, 200, 300) nach Anspruch 1, wobei der Nutteil (122, 222) ein Mehrphasensystem bildet, das eine erste Phase und eine von der ersten Phase verschiedene zweite Phase aufweist,
der Nutteil(122, 222) eine Mehrzahl von ersten Nuten (122a, 222a), auf die die Spule (110) gewickelt ist, und eine Mehrzahl von zweiten Nuten (122b, 222b), auf die die Spule (110) nicht gewickelt ist, aufweist.

5. Stator (100, 200, 300) nach Anspruch 1, wobei der Nutteil (122, 222) ein Mehrphasensystem bildet, das eine erste Phase und eine von der ersten Phase verschiedene zweite Phase aufweist,
der Nutteil (122, 222) eine Mehrzahl von ersten Nuten (122a, 222a), auf die die Spule (110) gewickelt ist, und eine Mehrzahl von zweiten Nuten (122b, 222b), auf die die Spule (110) nicht gewickelt ist, aufweist, und
die Anzahl der ersten Nuten (122a, 222a), die die erste Phase bilden, und die Anzahl der ersten Nuten (122a, 222a), die die zweite Phase bilden, einander gleich sind.

6. Stator (100, 200, 300) nach Anspruch 1, wobei der Nutteil (122, 222) ein Mehrphasensystem bildet, das eine erste Phase und eine von der ersten Phase verschiedene zweite Phase aufweist,
der Nutteil (122, 222) eine Mehrzahl von ersten Nuten (122a, 222a), auf die die Spule (110) gewickelt ist, und eine Mehrzahl von zweiten Nuten (122b, 222b), auf die die Spule (110) nicht gewickelt ist, aufweist, und
eine Länge der ersten Nut (122a, 222a), die die erste Phase bildet, und eine Länge der ersten Nut (122a, 222a), die die zweite Phase bildet, so ausgebildet sind, dass sie gleich sind.

7. Stator (100, 200, 300) nach Anspruch 1, wobei der Nutteil (122, 222) eine Mehrzahl von ersten Nuten (122a, 222a), auf die die Spule (110) gewickelt ist, und eine Mehrzahl von zweiten Nuten (122b, 222b), auf die die Spule (110) nicht gewickelt ist, aufweist, und
zumindest einige der Mehrzahl von zweiten Nuten (122b, 222b) so ausgebildet sind, dass sie Längen aufweisen, die sich von der der ersten Nut (122a, 222a) unterscheiden.

8. Stator (100, 200, 300) nach Anspruch 1, wobei die erste Nut (122a, 222a) eine Nut (122a, 222a) ist, die so ausgebildet ist, dass sie sich von dem Bogenabschnitt (121c, 121d) um eine bestimmte Länge erstreckt, und
die zweite Nut (122b, 222b) eine Nut (122b, 222b) ist, die so ausgebildet ist, dass sie sich von dem geraden Abschnitt (121a, 121b) um eine bestimmte Länge erstreckt.

9. Elektromotor (1000), umfassend:
ein Gehäuse (1100);
einen Rotor (1200), der eine drehbar in dem Gehäuse (1100) gelagerte Rotorwelle (1210) und eine Mehrzahl von Magneten (1220), die in einer Umfangsrichtung der Rotorwelle (1210) angeordnet sind, aufweist; und
einen Stator (100, 200, 300), der an dem Gehäuse (1100) befestigt ist, und in dem eine Spule (110) um mindestens eine Nut gewickelt ist,
wobei der Stator (100, 200, 300) der Stator (100, 200, 300) für einen Elektromotor (1000) nach einem der Ansprüche 1 bis 8 ist.

10. Elektromotor (1000) nach Anspruch 9, wobei die Rotorwelle (1210) über eine Getriebeeinheit mit einer Antriebsstange (2), die in ein Inneres des Gehäuses (1100) eintritt, getriebegekoppelt ist, und
die Antriebsstange (2) über die Getriebeeinheit exzentrisch mit der Rotorwelle (1210) verbunden ist.

## Revendications

1. Stator (100, 200, 300) pour un moteur électrique (1000), comprenant :
au moins une bobine (110) ; et
un noyau de stator (120, 120', 120", 220, 320), qui présente une culasse (121, 221) qui est réalisée en forme de boucle fermée, et une partie d'encoche (122, 222) qui s'étend à partir de la culasse (121, 221) sur une longueur déterminée,
dans lequel la partie d'encoche (122, 222) présente au moins une première encoche (122a, 222a) sur laquelle la bobine (110) est enroulée, et au moins une deuxième encoche (122b, 222b) sur laquelle la bobine (110) n'est pas enroulée,
dans lequel la culasse (121, 221) présente :
• au moins une section en arc (121c, 121d) qui est réalisée de manière à présenter une courbure prédéterminée ; et
• au moins une section droite (121a, 121b) qui est reliée à une extrémité de l'au moins une section en arc (121c, 121d),
dans lequel l'au moins une section en arc (121c, 121d) présente une première section en arc (121c) et une deuxième section en arc (121d) qui ne sont pas directement reliées l'une à l'autre,
dans lequel l'au moins une section droite (121a, 121b) présente une première section droite (121a) qui est configurée pour relier une extrémité de la première section en arc (121c) et une extrémité de la deuxième section en arc (121d) l'une à l'autre, et une deuxième section droite (121b) qui est configurée pour relier l'autre extrémité de la première section en arc (121c) et l'autre extrémité de la deuxième section en arc (121d) l'une à l'autre,
dans lequel la deuxième section droite (121b) présente une première section (121b') qui est reliée à une extrémité de la première section en arc (121c), et une deuxième section (121b'') qui est reliée à une extrémité de la première section (121b') et qui est reliée à une extrémité de la deuxième section en arc (121d), et
dans lequel la deuxième section (121b'') est reliée à une extrémité de la première section (121b') de telle sorte qu'elle présente un angle prédéterminé à l'exception de 0 degré avec la première section (121b'), **caractérisé en ce que** la première section en arc (121c) et la deuxième section en arc (121d) sont réalisées de manière à présenter des longueurs différentes.

2. Stator (100, 200, 300) selon la revendication 1, dans lequel la première encoche (122a, 222a) et la deuxième encoche (122b, 222b) sont réalisées de manière à s'étendre vers l'intérieur à partir de la culasse (121, 221) sur une longueur déterminée.

3. Stator (100, 200, 300) selon la revendication 1, dans lequel la première encoche (122a, 222a) et la deuxième encoche (122b, 222b) sont réalisées de manière à s'étendre vers l'extérieur à partir de la culasse (121, 221) sur une longueur déterminée.

4. Stator (100, 200, 300) selon la revendication 1, dans lequel la partie d'encoche (122, 222) forme un système multiphasé qui présente une première phase et une deuxième phase différente de la première phase,
la partie d'encoche (122, 222) présente une pluralité de premières encoches (122a, 222a) sur lesquelles la bobine (110) est enroulée, et une pluralité de deuxièmes encoches (122b, 222b) sur lesquelles la bobine (110) n'est pas enroulée.

5. Stator (100, 200, 300) selon la revendication 1, dans lequel la partie d'encoche (122, 222) forme un système multiphasé qui présente une première phase et une deuxième phase différente de la première phase,
la partie d'encoche (122, 222) présente une pluralité de premières encoches (122a, 222a) sur lesquelles la bobine (110) est enroulée, et une pluralité de deuxièmes encoches (122b, 222b) sur lesquelles la bobine (110) n'est pas enroulée, et
le nombre des premières encoches (122a, 222a) qui forment la première phase et le nombre des premières encoches (122a, 222a) qui forment la deuxième phase sont égaux entre eux.

6. Stator (100, 200, 300) selon la revendication 1, dans lequel la partie d'encoche (122, 222) forme un système multiphasé qui présente une première phase et une deuxième phase différente de la première phase,
la partie d'encoche (122, 222) présente une pluralité de premières encoches (122a, 222a) sur lesquelles la bobine (110) est enroulée, et une pluralité de deuxièmes encoches (122b, 222b) sur lesquelles la bobine (110) n'est pas enroulée, et
une longueur de la première encoche (122a, 222a) qui forme la première phase et une longueur de la première encoche (122a, 222a) qui forme la deuxième phase sont réalisées de manière à être égales.

7. Stator (100, 200, 300) selon la revendication 1, dans lequel la partie d'encoche (122, 222) présente une pluralité de premières encoches (122a, 222a) sur lesquelles la bobine (110) est enroulée, et une pluralité de deuxièmes encoches (122b, 222b) sur lesquelles la bobine (110) n'est pas enroulée, et
au moins quelques-unes de la pluralité de deuxièmes encoches (122b, 222b) sont réalisées de manière à présenter des longueurs qui diffèrent de celle de la première encoche (122a, 222a).

8. Stator (100, 200, 300) selon la revendication 1, dans lequel la première encoche (122a, 222a) est une encoche (122a, 222a) qui est réalisée de manière à s'étendre à partir de la section en arc (121c, 121d) sur une longueur déterminée, et
la deuxième encoche (122b, 222b) est une encoche (122b, 222b) qui est réalisée de manière à s'étendre à partir de la section droite (121a, 121b) sur une longueur déterminée.

9. Moteur électrique (1000), comprenant :
un boîtier (1100) ;
un rotor (1200), qui présente un arbre de rotor (1210) monté à rotation dans le boîtier (1100) et une pluralité d'aimants (1220) qui sont disposés dans une direction circonférentielle de l'arbre de rotor (1210) ; et
un stator (100, 200, 300) qui est fixé au boîtier (1100), et dans lequel une bobine (110) est enroulée autour d'au moins une encoche,
dans lequel le stator (100, 200, 300) est le stator (100, 200, 300) pour un moteur électrique (1000) selon l'une quelconque des revendications 1 à 8.

10. Moteur électrique (1000) selon la revendication 9, dans lequel l'arbre de rotor (1210) est couplé par engrenage par l'intermédiaire d'une unité d'engrenage avec une tige d'entraînement (2) qui pénètre dans un intérieur du boîtier (1100), et
la tige d'entraînement (2) est reliée de manière excentrique à l'arbre de rotor (1210) par l'intermédiaire de l'unité d'engrenage.
